## Europäisches Patentamt

## European Patent Office

## Office européen des brevets

(11) Publication number: **0 006 690**
**B1**

# EUROPEAN PATENT SPECIFICATION

(45) Date of publication of patent specification: **06.01.82**

(21) Application number: **79301025.7**

(22) Date of filing: **31.05.79**

(51) Int. Cl.³: **F 16 H 17/02, F 16 H 15/38**
**//F16H37/12**

(54) **Control circuit for a continuously variable ratio transmission.**

(30) Priority: **31.05.78 GB 2594078**

(43) Date of publication of application:
**09.01.80 Bulletin 80/1**

(45) Publication of the grant of the European patent:
**06.01.82 Bulletin 82/1**

(84) Designated Contracting States:
**BE DE FR GB IT SE**

(56) References cited:
**DE - B - 1 425 820**
**GB - A - 1 280 987**
**GB - A - 1 392 440**
**GB - A - 1 392 450**
**GB - A - 1 392 707**
**US - A - 3 406 597**
**US - A - 3 574 289**

(73) Proprietor: **BL CARS Limited**
**174 Marylebone Road**
**London NW1 5AA (GB)**

(72) Inventor: **Strange, Victor Edward**
**13 Welford Road**
**Solihull West Midlands (GB)**
Inventor: **Poole, Joseph John**
**277 Station Road Balsall**
**Common Coventry (GB)**

(74) Representative: **Muir, Peter Richard**
**BL LIMITED PATENT AND TRADE MARK**
**DEPARTMENT Cowley Body Plant**
**Oxford OX4 5NL (GB)**

Courier Press, Leamington Spa, England.

## Control circuit for a continuously variable ratio transmission

This invention relates to continuously variable ratio transmissions and more particularly to control systems for transmissions of the "rolling friction" type wherein rotatable elements engage one another in a rolling relationship capable of variation to vary the ratio between an input member and an output member of the transmission.

In an example of such a transmission tiltable rollers provide a driving connection between facing surfaces of an input disc and an output disc mounted for rotation about a common main axis. To change the transmission ratio the rollers are steered to a different tilt angle by displacing the roller axes out of their equilibrium positions, wherein they intersect the main rolling axis of the discs, until the desired ratio is obtained, when the rollers are returned to their equilibrium condition. Each of the rollers exhibits a driving torque reaction and the roller steering means, which may be hydraulic or mechanical, must balance the total roller torque reaction. The transmission ratio is then changed under steady load conditions by varying the balancing force to above or below that needed to match roller torque reaction. This can be achieved by employing a hydraulic control circuit having, for example, a double sided piston or an interconnected pair of pistons. Force on, say, the double sided piston is then determined by the pressure difference between the fluid on its two sides, and thus the transmission ratio can be controlled by varying the value of this pressure difference.

Such a transmission is shown in United Kingdom Patent Specification No. 1078791. A servo valve is used to control a ratio actuator which balances roller reaction torque. The force of actuation of the servo valve is not directly related to the roller reaction torque however, and this can lead to complication when arranging for the transmission to be controlled by an electronic logic circuit rather than the hydromechanical control arrangement shown in Specification No. 1078791.

According to one aspect of the present invention there is provided a continuously variable ratio transmission of the rolling friction type, wherein the transmission ratio is determined by the orientation of a roller, and a means for controlling the orientation of the roller acts by balancing roller torque reaction, including a hydraulic control circuit comprising a source of pressurised fluid, and valve means for controlling fluid flow to a pair of outlets each connected to a sink by way of a respective flow restriction means, characterised in that the difference in pressure in said outlets intermediate said valve means and said flow restriction means is used to balance roller torque reaction and said pressure difference is proportional to the actuating force on said valve means at least under steady state conditions.

Preferably the flow restrictions means comprise means for ensuring equal flow rates through each of said restrictions to said sink. Thus the means may, for example, have variable flow cross-sectional area orifices in order to vary their flow resistance to control the flow rate of fluid. Such an arrangement enables the pressure difference in the outlets to be proportional to the actuating force at all times, even when additional fluid flow is generated in the outlets by movement of the piston resulting from movement of the rollers in response to changed transmission speeds.

Preferably means are provided to ensure that pressure immediately downstream of said flow restriction means is kept at or above a datum pressure, whereby hydraulic fluid is maintained in each of said outlets irrespective of whether they are in communication with said source by way of said valve means.

Moreover it is preferred to include flow control means for ensuring that the flow rate of fluid passing through said valve remains substantially constant. This feature will be particularly beneficial when said source comprises a pump driven directly by an engine so that excessive flow rates and consequential pumping losses will be avoided as engine speed increases.

Pressurised fluid from said source may be used to provide the end load on the rolling components of the transmission as shown in United Kingdom Specification 1078791. This method of providing end load has the advantage that the relationship between end load and torque transmitted through the rolling components, as reflected by the roller torque reaction, can be determined over the range of steady state operating conditions. Difficulties occur however when the rollers are forced under transient conditions to the extreme ends of their operating range, since if mechanical end stops are used to limit roller tilt angle the hydraulic roller control force would be supplemented by an indeterminate load on the mechanical end stops. This results in a mismatch between the roller control force and the loading on the rolling components, and can lead to slippage and possibly damage of the rolling surfaces.

To overcome these difficulties the use of hydraulic end stops has been proposed, whereby movement of the rollers to their extreme tilt angle causes the flow of fluid from source to sink to be severely curtailed downstream of some hydraulic means for balancing the roller reaction torque thus causing pressure in the circuit to rise to provide an adequate balancing force to maintain wholly hydraulic control. The high pressure is of course also transmitted to the end loading device to that the predetermined relationship between roller reaction torque and end loading is maintained.

Viewed from a second aspect the invention provides a continuously variable ratio transmission of the rolling friction type, having a drive transmitting component which rolls on another with a normal force which is determined by an end loading means in a hydraulic control circuit including a source of pressurised fluid, and hydraulic end stop means located downstream of said end loading means, and which are mechanically connected to the rolling component, and are operable when the transmission is at or near its extreme ratio to constrict fluid flow so as to cause a rise in pressure in means for hydraulically limiting the transmission ratio and in the end loading means, characterised by means for attenuating peak pressures in the fluid upstream of said hydraulic end stop means.

Although such attenuation means can result in a mismatch between end load and roller reaction torque and is thus apparently counterproductive, the applicants have discovered that it is preferable to risk such mismatch if extreme end loadings on the rolling components such as during transient conditions can be avoided by reducing peak fluid pressures.

The attenuation means can be constituted by an arrangement such as a known shock alleviator, but could alternatively be a simple pressure relief valve for example.

Viewed from a third aspect the invention provides a continuously variable ratio transmission of the rolling friction type, wherein the transmission ratio is determined by the orientation of a roller, and having a hydraulic control circuit including a source of pressurised fluid and electrically operated valve means controlling fluid flow to means for balancing roller torque reaction, and having emergency override means comprising means for disabling the electrical operation of said valve means and means for effecting operation of the valve means by fluid pressure from said source.

Such an arrangement enables the transmission to continue to transmit torque should the electronic unit controlling operation of the valve means malfunction. If the transmission is coupled to an epicyclic gearset to provide a plurality of operating regimes, means will be included to override the electrical actuation of valves controlling the transmission brake or clutch as appropriate to retain drive in low regime.

An embodiment of the invention will now be described by way of example and with reference to the accompanying drawings in which:

Figure 1 is a schematic view of a continuously variable ratio transmission of the rolling friction type connected to an epicyclic gearset; and

Figure 2 is a hydraulic control circuit for the transmission of Figure 1.

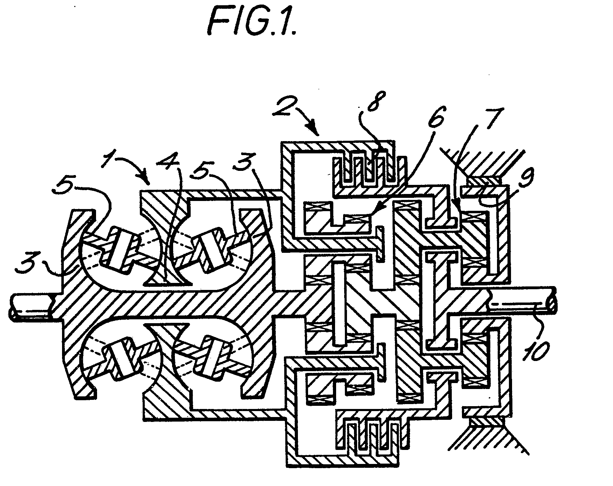

Figure 1 shows a variable ratio transmission 1 of the rolling friction type connected to a compound epicyclic gearset 2. Transmission 1 comprises a pair of input discs 3. Rotation of the discs 3 is communicated to an output disc 4 by rollers 5 which are tiltable inter alia to the positions shown in phantom. Output from the variable-ratio transmission is passed to a first epicyclic gearset 6 and thence through a second gearset 7. The carriers of gearsets 6 and 7 can be locked together by a clutch 8 whilst a brake 9 provides further control over operation of the gearset 2. Output from the transmission is by way of a shaft 10 connected to the carrier of gearset 7.

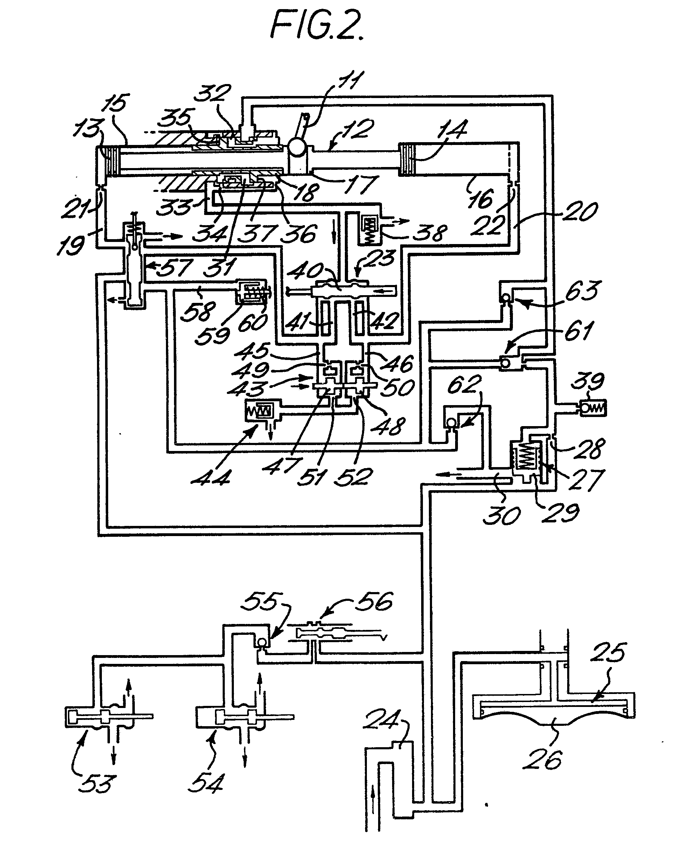

In Figure 2, a lever 11 is connected to a mechanical linkage (not shown) for controlling roller tilt angle. Roller torque reaction is transmitted through the linkage to lever 11, and can act in either direction dependent upon the torque flow direction through the transmission.

Means are provided for exerting a force on lever 11 thereby to balance and determine roller reaction torque. A double acting piston 12 has end portions 13 and 14 which slide in cylinders 15 and 16 respectively and has a central portion 17 which receives the end of lever 11 and carries a sliding sleeve 18. Cylinders 15 and 16 are fed with pressurised fluid by passages 19 and 20 which have respective constrictions 21 and 22 which act as dampers on piston motion and prevent hunting under steady load conditions. The pressure difference across the piston is controlled by a valve means 23.

A positive fixed displacement pump 24 supplies pressurised oil to the circuit, and is driven directly by the engine of a vehicle in which the transmission is mounted. The output of the pump is used to provide end loading on the rolling components by way of a piston cylinder unit shown schematically at 25, the piston 26 being part of one of the end discs 3 engaged by the peripheries of the rollers (Figure 1). Downstream of the end loading device 25 the pumped flow passes through flow control means 27 which ensures that the flow rate through the valve means 23 remains substantially constant, although the pump output may be varying by up to eight times this flow rate due to variations in engine speed. Flow control means 27 operate by passing flow to the valve means 23 through a constricted orifice 28; the pressure drop across the orifice, which is proportional to the flow rate, creates a pressure difference across a sprung piston 29 to bring the flow upstream into communication with a conduit 30 which supplies oil to a lubrication system for the transmission. This partially vents the pump output, and the spring rate acting on piston 29 is such that sufficient of the pump output can be diverted into conduit 30 to ensure that the flow rate through constricted orifice 28 can be maintained within the required limits.

Under normal circumstances all the flow passing through orifice 28 will then proceed to the sleeve 18 where it enters an annular passage communicating with passage 31, as shown, or with passage 32 when the sleeve is at the other end of its travel. Either passage 31 or passage 32 is normally in communication with a passage 33 leading to valve means 23, by way of a respective orifice 34 or 36. As the sleeve is displaced by movement of lever 11 to its extreme left hand (as viewed) position however, corresponding to an extreme tilt angle of the rollers, orifice 34 becomes constricted. This effectively produces a blockage in the oil flow and causes a build up of pressure upstream of the orifice 34. The increased fluid pressure then acts on shoulder 35 of the sleeve to force it to the right (as viewed), thereby preserving an opening at 34 and moreover providing a hydraulically determined force limiting lever movement and hence roller tilt angle, balancing roller reaction torque. When the lever and rollers are at the other end of their travel, communication between passages 32 and 33 will be restricted by constriction of orifice 36 to provide the required limiting force by way of pressure build up on shoulder 37. The arrangement thus provides hydraulic end stops for the roller tilt angle control, and hence the relationship between roller reaction torque and end loading by way of piston cylinder unit 25 is predetermined for the vast majority of operating circumstances, and damage through roller slippage effectively obviated.

Excessive circuit pressure is guarded against by a high pressure blow-off valve 38 which communicates with a fluid sink comprising the oil sump which is at a base pressure. Because the blow-off valve 38 is located downstream of the hydraulic end stop arrangement, it cannot act to relieve pressure upstream of orifices 34 or 36 if, for example, lever movement causes these orifices to be completely closed such as in the event of there being shock loadings on the transmission. This is considered desirable in as much as it means that the valve 38 cannot reduce the force produced by the hydraulic end stops by reducing the maximum pressure available for acting on shoulder 35 or 37; if it were otherwise the lever force might overcome the hydraulic end stops and be restrained by the mechanical stops, resulting in a roller torque which is higher than ideal for the end loading available from unit 25. Roller slippage could result, with possible damage to the rolling surfaces. Such has been the extent of thinking hitherto.

The provision only of such a high pressure blow-off valve as 38 has, however, a disadvantage. The applicants have discovered that under certain conditions pressure upstream of the hydraulic end stops can rise to such an extent as to damage the rolling components by the application of excessive end load. Accordingly means are provided for attenuating peak pressures in the circuit upstream of the end stops, comprising an ultra-high pressure blow-off or pressure relief valve 39 to the sump.

When valve 39 opens, some of the pressure rise that would otherwise occur is attenuated so that the force exerted by the hydraulic end stops may not match the force required to balance the lever 11. In this case the force on the lever will be due to the hydraulic end stops and also to the mechanical end stops so that mismatch between end load and lever force occurs and roller slippage may result.

The pressure rating of the valve (39) is such however, that only those peak pressures likely to cause damage to the rolling components by way of excessive end loadings are attenuated; below these pressures the no-slip conditions are retained. It will be appreciated that at the peak pressures referred to, which will be essentially of a transient nature, the risks of damage caused by slippage are of less significance than damage such as a cracking disc, which can result from excessive end loading. Instead of an ultra-high pressure blow-off valve other means, such as a gas-filled shock alleviator, could of course be used.

Valve means 23 includes a spool 40 normally activated by an electro-magnetic device (not shown) which is controlled by an electronic logic circuit. The valve has a pair of outlets 41 and 42 which are connected to passages 19 and 20 respectively. A pair of passages feed fluid pressure in the respective outlets back to the valve means so that a force is exerted on the spool 40 proportional to the pressure difference in the outlets. This is balanced by the actuating force on the spool, and this arrangement will, on its own provide that at least under steady state conditions the pressure difference across the piston, and hence the lever force, is proportional to the actuating force on the valve spool. This is in turn proportional to the voltage across the electro-magnetic means.

Flow from the outlets 41 and 42 then passes to the sump by way of flow equalisation means 43 and means for ensuring that pressure in each outlet always exceeds a datum level, comprising a very low pressure valve 44. Valve 44 ensures that at no time will fluid drain out of either of passages 19 or 20 if for example they become isolated from the pump by valve means 23, since otherwise there could be a delay in subsequent control functions if the passage and cylinder 15 or 16 had to be refilled with fluid.

Flow equalisation means 43 ensures that the flows through each of the passages 45 and 46 are equal; this ensures that the actuating force on spool 40 is always proportional to the pressure difference in the outlets 41 and 42, even when the piston moves. The flow equalisation means operates by subjecting each of interconnected pistons 47 and 48 to the pressure difference across a respective flow restricting orifice 49 and 50. The pressure difference in each case will be proportional to the flow rate through the orifice, and the flow rates are adjusted by movement of the pistons to vary the flow cross sectional areas of orifices 51 and 52. The interconnected pistons thus move until they are in equilibrium which is to say the flow rates through orifices 49 and 50 are equalised.

Solenoid controlled valves 53 and 54 control hydraulic actuation of the brake 9 and clutch 8 respectively and are connected to the pump output by way of a non-return valve 55. Valve 55 ensures that operating pressure is maintained in the valves at all times, including occasions when pump output drops, by storing up peak pump pressures. Slippage of the clutch and brake are thereby avoided. A control valve 56 connected to a manual selector lever (not shown) such as that used in conventional automatic gearboxes, isolates the clutch and brake when the lever is in the "Park" and "Neutral" positions.

The remaining facility of the circuit is an emergency override or "get you home" arrangement. This will be used for example in the event of a malfunction in the electronic logic circuit. Operation of a control on the vehicle's dashboard will serve firstly to disable the electrical operation of the various valves in the hydraulic circuit whilst energising the solenoid controlling the brake to actuate the component, and secondly to operate a valve 57 in the hydraulic circuit. Operation of valve 57 connects the passage 19 to the sump and supplies fluid at pump pressure to passage 58. This causes valve spool 40 to be thrust to the right as viewed, by piston 59 against the action of spring 60, which directs the majority of the oil flow into outlet 42 and via orifices 50 and 52 and datum valve 44 to the sump. Orifices 50 and 52 being effectively fixed generate a pump output pressure proportional to pump speed on the right hand side of piston 12. In addition, fluid under pressure is fed via non-return valve 63 to the valve means 23, thus by-passing the flow control means 27 which is isolated from the valve means 23 by valve 61. Flow of fluid for lubrication purposes is provided via a non-return valve 62.

In operation this override facility causes an actuating force to be exerted on piston 12 in proportion to engine speed which in turn causes the force on the lever 11 and hence transmission torques to be proportional to engine speed. The proportionality depends on the sizes of orifices 50 and 52 which are sized to give reasonable driving torques without excessive engine speeds. The transmission will remain in low regime since the brake is always actuated while the clutch is not, and thus the speed is the vehicle will be limited. The facility will however enable the driver to proceed to a garage or service area in the event of electrical malfunction.

**Claims**

1. A continuously variable ratio transmission of the rolling friction type, wherein the transmission ratio is determined by the orientation of a roller (5), and a means for controlling the orientation of the roller acts by balancing roller torque reaction, including a hydraulic control circuit comprising a source of pressurised fluid (24), and valve means (23) for controlling fluid flow to a pair of outlets (41, 42) each connected to a sink by way of a respective flow restriction means, characterised in that the difference in pressure in said outlets (41, 42) intermediate said valve means (23) and said flow restriction means (43) is used to balance roller torque reaction and said pressure difference is proportional to an actuating force on said valve means at least under steady state conditions.

2. A continuously variable ratio transmission as claimed in claim 1, characterised in that said flow restriction means (43) include means (47, 48) for ensuring equal flow rates through each of said restrictions to said sink.

3. A continuously variable ratio transmission as claimed in claim 2, characterised in that said means (47, 48) for ensuring equal flow rates includes an orifice (51, 52) of variable cross-sectional area.

4. A continuously variable ratio transmission as claimed in claim 1, 2 or 3 characterised by means (44) for ensuring that pressure immediately downstream of said flow restriction means (43) is kept at or above a datum pressure.

5. A continuously variable ratio transmission as claimed in any preceding claim, characterised by flow control means (27) for ensuring that the flow rate of fluid passing through said valve means (23) remains substantially constant.

6. A continuously variable ratio transmission as claimed in any preceding claim, characterised in that said source comprises a pump (24) driven at a speed proportional to the input speed of the transmission (1).

7. A continuously variable ratio transmission as claimed in any preceding claim, characterised in that said valve means (23) is actuated by electro-magnetic means controlled by an electronic logic circuit.

8. A continuously variable ratio transmission of the rolling friction type, having a drive-transmitting component (5) which rolls on another with a normal force which is determined by an end loading means (25, 26) in a hydraulic control circuit including a source of pressurised fluid (24), and hydraulic end stop means (18) which are located downstream of said end loading means, and which are mechanically connected to the rolling component (5), and are operable when the transmission is at or near its extreme ratio to constrict fluid flow so as to cause a rise in pressure in means for hydraulically limiting the transmission ratio and in the end loading means (25, 26), characterised by means (39) for attenuating peak pressures in the fluid upstream of said hydraulic end stop means (18).

9. A continuously variable ratio transmission as claimed in claim 8, characterised in that said attenuating means comprises a pressure relief valve (39).

10. A continuously variable ratio transmission as claimed in claim 8, characterised in that said attenuating means comprises a shock alleviator.

11. A continuously variable ratio transmission as claimed in claim 10, characterised in that said shock alleviator includes a reservoir of compressible fluid.

12. A continuously variable ratio transmission as claimed in any one of claims 8 to 11, characterised by means (44) for maintaining fluid in said circuit downstream of said hydraulic end stops at or above a datum pressure.

13. A continuously variable ratio transmission of the rolling friction type, wherein the transmission ratio is determined by the orientation of a roller (5) and having a hydraulic control circuit including a source of pressurised fluid (24) and electrically operated valve means (23) controlling fluid flow to means for balancing roller torque reaction, characterised by emergency override means comprising means for disabling the electrical operation of said valve means and means (57) for effecting operation of the valve means by fluid pressure from said source (24).

14. A continuously variable ratio transmission as claimed in claim 13, characterised in that the transmission (1) can operate in one of a plurality of regimes, and in that means are provided to override the regime selection controls to retain the transmission in a predetermined regime.

15. A continuously variable ratio transmission as claimed in claim 13 or 14, characterised in that said valve means (23) is actuated by a resiliently biased piston cylinder unit (59, 60) in communication with said source (24).

16. A continuously variable ratio transmission as claimed in claim 13, 14, or 15, characterised in that said torque reaction balancing means include a double sided piston (12), and in that said override means operate to connect one side of said piston (13) to base pressure.

17. A continuously variable ratio transmission as claimed in any one of claims 13 to 16, characterised in that said override means (59, 60) apply to said valve means a biasing force variable proportionally with the input speed of the transmission.

**Patentansprüche**

1. Getriebe vom Rollreibungstyp mit kontinuierlich änderbarem Übersetzungsverhältnis, bei dem das Übersetzungsverhältnis durch die Orientierung eines Rollkörpers (5) bestimmt ist und eine Einrichtung zur Steuerung der Rollkörperorientierung durch Ausgleichen der Rollkörperdrehmomentreaktion arbeitet, mit einer hydraulischen Steuerschaltung, die eine Druckfluidquelle (24) und eine Ventileinrichtung (23) zur Steuerung der Fluidströmung zu einem Paar von Auslässen (41, 42) aufweist, die jeweils über eine Durchflußbeschränkungseinrichtung mit einer Senke verbunden sind, dadurch gekennzeichnet, daß die Druckdifferenz an den genannten Auslässen (41, 42) zwischen der genannten Ventileinrichtung (23) und der Durchflußbeschränkungseinrichtung (43) zum Ausgleichen der Rollkörperdrehmomentreaktion eingesetzt wird und daß die genannte Druckdifferenz einer Betätigungskraft an der genannten Ventileinrichtung zumindest unter stationären Bedingungen proportional ist.

2. Getriebe mit kontinuierlich änderbarem Übersetzungsverhältnis nach Anspruch 1, dadurch gekennzeichnet, daß die genannte Durchflußbeschränkungseinrichtung (43) eine Einrichtung (47, 48) zum Sicherstellen gleicher Durchflußmengen bzw. Durchfluß-geschwindigkeiten durch jede der genannten Durchflußbeschränkungen zur genannten Senke aufweist.

3. Getriebe mit kontinuierlich änderbarem Übersetzungsverhältnis nach Anspruch 2, dadurch gekennzeichnet, daß die genannte Einrichtung (47, 48) zum Sicherstellen gleicher Durchflußmengen bzw. Durchflußgeschwindigkeiten eine Öffnung (51, 52) mit änderbarer Querschnittsfläche aufweist.

4. Getriebe mit kontinuierlich änderbarem Übersetzungsverhältnis nach Anspruch 1, 2 oder 3, gekennzeichnet durch eine Einrichtung (44) zum Sicherstellen, daß der Druck unmittelbar nach der genannten Durchflußbeschränkungseinrichtung (43) bei einem Grunddruck oder oberhalb dieses Grunddrucks gehalten ist.

5. Getriebe mit kontinuierlich änderbarem Übersetzungsverhältnis nach irgendeinem der vorhergehenden Ansprüche, gekennzeichnet durch eine Durchflußsteuerungseinrichtung (27) zum Sicherstellen, daß die Durchflußmenge bzw. die Durchflußgeschwindigkeit des die genannte Ventileinrichtung (23) passierenden Fluids im wesentlichen konstant bleibt.

6. Getriebe mit kontinuierlich änderbarem Übersetzungsverhältnis nach irgendeinem der vorhergehenden Ansprüche, dadurch gekennzeichnet, daß die genannte Quelle eine Pumpe (24) aufweist, die mit einer der Drehzahl des Getriebes (1) proportionalen Drehzahl angetrieben ist.

7. Getriebe mit kontinuierlich änderbarem Übersetzungsverhältnis, nach irgendeinem der vorhergehenden Ansprüche, dadurch gekennzeichnet, daß die genannte Ventileinrichtung (23) durch eine elektromagnetische Einrichtung betätigt wird, die durch eine elektronische Logikschaltung gesteuert ist.

8. Getriebe vom Rollreibungstyp mit kontinuierlich änderbarem Übersetzungsverhältnis, mit einem Antriebsübertragungsteil (5), das auf einem anderen mit einer Normalkraft abrollt, die durch eine Endbelastungseinrichtung (25, 26) in einer eine Druckfluidquelle (24) aufweisenden hydraulischen Steuerschaltung und hydraulische Endstopmittel (18) bestimmt ist, die der Endbelastungseinrichtung nachgeschaltet angeordnet sind, mit dem Rollkörper (5) mechanische verbunden sind und dann, wenn sich das Getriebe bei seinem extremen Übersetzungsverhältnis oder nahe seinem extremen Übersetzungsverhältnisses befindet, zur Beschränkung des Fluidflusses betreibbar sind, so daß eine Druckanstieg in einer Einrichtung zum hydraulischen Begrenzen des Übersetzungsverhältnisses und in der Endbelastungseinrichtung (25, 26) verursacht wird, gekennzeichnet durch eine Einrichtung (39) zum Schwächen von Spitzendrücken im Fluid vor den genannten hydraulischen Endstopmitteln (18).

9. Getriebe mit kontinuierlich änderbarem Übersetzungsverhältnis nach Anspruch 8, dadurch gekennzeichnet, daß die genannte Schwächungseinrichtung ein Überdruckventil (39) aufweist.

10. Getriebe mit kontinuierlich änderbarem Übersetzungsverhältnis nach Anspruch 8, dadurch gekennzeichnet, daß die genannte Schwächungseinrichtung einen Stoßminderer aufweist.

11. Getriebe mit kontinuierlich änderbarem Übersetzungsverhältnis nach Anspruch 10, dadurch gekennzeichnet, daß der genannte Stoßminderer ein Resevoir an kompressiblem Fluid aufweist.

12. Getriebe mit kontinuierlich änderbarem Übersetzungsverhältnis nach irgendeinem der Ansprüche 8 bis 11, gekennzeichnet durch eine Einrichtung (44), um Fluid in der genannten Schaltung hinter den genannten hydraulischen Endstopmitteln bei einem Grunddruck oder oberhalb dieses Grunddrucks zu halten.

13. Getriebe vom Rollreibungstyp mit kontinuierlich änderbarem Übersetzungsverhältnis, bei dem das Übersetzungsverhältnis durch die Orientierung eines Rollkörpers (5) bestimmt ist und das eine hydraulische Steuerschaltung aufweist, die eine Druckfluidquelle (24) und eine elektrisch betätigte Ventileinrichtung (23) aufweist, die die Fluidströmung zu einer Einrichtung zum Ausgleichen der Rollkörperdrehmomentreaktion steuert, gekennzeichnet durch eine Not-Übersteuerungseinrichtung, die Mittel zum Außerkraftsetzen des elektrischen Betreibens der genannten Ventileinrichtung sowie Mittel (57) zum Betreiben der Ventileinrichtung durch Fluiddruck von der genannten Quelle (24) aufweist.

14. Getriebe mit kontinuierlich änderbarem Übersetzungsverhältnis nach Anspruch 13, dadurch gekennzeichnet, daß das Getriebe (1) in einer von mehreren Arten arbeiten kann und daß Mittel vorgesehen sind, um die Arbeitsartsteuerung zu übersteuern, um das Getriebe in einer vorbestimmten Arbeitsart zu halten.

15. Getriebe mit kontinuierlich änderbarem Übersetzungsverhältnis nach Anspruch 13 oder 14, dadurch gekennzeichnet, daß die genannte Ventileinrichtung (23) durch eine federnd vorgespannte Kolben-Zylinder-Einheit (59, 60), die mit der Quelle (24) in Verbindung steht, betätigt wird.

16. Getriebe mit kontinuierlich änderbarem Überdruck nach Anspruch 13, 14 oder 15, dadurch gekennzeichnet, daß die genannte Drehmomentreaktionsausgleichseinrichtung einen Zweiseitenkolben (12) aufweist und daß die genannte Übersteuerungseinrichtung durch Verbinden einer Seite des genannten Kolbens (13) mit dem Grunddruck arbeitet.

17. Getriebe mit kontinuierlich änderbarem Überdruck nach irgendeinem der Ansprüche 13 bis 16, dadurch gekennzeichnet, daß die genannte Übersteuerungseinrichtung (59, 60) auf die genannte Ventileinrichtung Vorspannkraft aufbringt, die proportional zur Eingangsdrehzahl des Getriebes änderbar ist.

**Revendications**

1. Variateur de vitesse réglable en continu du type à friction de roulement dans lequel le rapport de transmission est déterminé par l'orientation d'un galet (5) et un moyen pour commander l'orientation du galet agit par équilibrage de la réaction de couple du galet, comportant un circuit de commande hydraulique comprenant une source de fluide sous pression (24) et un distributeur (23) servant à commander l'écoulement du fluide vers deux sorties (41, 42) reliées chacune à une décharge par l'intermédiaire d'un moyen respectif d'étranglement de l'écoulement, caractérisé en ce que la différence de pression des sorties (41, 42) entre le distributeur (23) et le moyen (43) d'étranglement du débit, est utilisé pour équilibrer la réaction de couple du galet et est proportionnelle à une force d'actionnement agissant sur le distributeur au moins dans les conditions de régime stable.

2. Variateur de vitesse réglable en continu suivant la revendication 1, caractérisé en ce que les moyens d'étranglement de l'écoulement (43) comprennent des moyens (47, 48) capables de garantir des débits d'écoulement égaux à travers chacun des étranglements vers la décharge.

3. Variateur de vitesse réglable en continu suivant la revendication 2, caractérisé en ce que les moyens (47, 48) servant à assurer des débits égaux comprennent un orifice (51, 52) dont la section droite a une surface variable.

4. Variateur de vitesse réglable en continu suivant la revendication 1, 2 ou 3, caractérisé par des moyens (44) servant à garantir que la pression régnant immédiatement en aval des moyens d'étranglement de l'écoulement (43) est maintenue au niveau ou au-dessus d'une pression de référence.

5. Variateur de vitesse réglable en continu suivant l'une des revendications précédentes, caractérisé par des moyens de réglage du débit (27) servant à garantir que le débit du fluide qui traverse le distributeur (23) reste au moins approximativement constant.

6. Variateur de vitesse réglable en continu suivant l'une des revendications précédentes, caractérisé en ce que la source comprend une pompe (24) entraînée à une vitesse proportionnelle à la vitesse d'entrée du variateur (1).

7. Variateur de vitesse réglable en continu suivant l'une des revendications précédentes, caractérisé en ce que le distributeur (23) est actionné par des moyens électromagnétiques commandés par un circuit logique électronique.

8. Variateur de vitesse réglable en continu du type à friction de roulement, comportant un composant (5) de transmission du mouvement qui roule sur un autre avec une force normale qui est déterminée par un dispositif (25, 26) de charge extrême d'un circuit de charge hydraulique qui comporte une source de fluide sous pression (24) et des moyens de butée d'extrémité hydraulique (18) qui sont situés en aval du dispositif de charge extrême et qui sont connectés mécaniquement aux composants roulants (5) et peuvent être mis en action lorsque le variateur se trouve dans son rapport extrême, ou à proximité de ce rapport extrême, pour provoquer une élévation de la pression dans des moyens prévus pour limiter hydrauliquement le rapport de transmission et dans le dispositif de charge extrême (25, 36), caractérisé par des moyens (39) d'atténuation des pressions de pointe dans le fluide, en amont des moyens de butée d'extrémités hydraulique (18).

9. Variateur de vitesse réglable en continu suivant la revendication 8, caractérisé en ce que les moyens d'atténuation comprennent une valve de détente de pression (39).

10. Variateur de vitesse réglable en continu suivant la revendication 8, caractérisé en ce que les moyens d'atténuation comprennent un amortisseur de chocs.

11. Variateur de vitesse réglable en continu suivant la revendication 10, caractérisé en ce que l'atténuateur de choc comprend un réservoir de fluide compressible.

12. Variateur de vitesse réglable en continu suivant l'une des revendications 8 à 11, caractérisé par des moyens (44) de maintien du fluide contenu dans le circuit en aval des butées d'extrémités hydraulique au niveau ou au-dessus d'une pression de référence.

13. Variateur de vitesse réglable en continu du type à friction de roulement, dans lequel le rapport de transmission est déterminé par l'orientation d'un galet (5), comportant un circuit de commande hydraulique qui comprend une source de fluide sous pression (24) et un distributeur (23) actionné électriquement qui commande l'envoi du fluide à un moyen d'equilibrage de la réaction de couple du galet, caractérisé par un dispositif de dépassement de limites, de secours, comprenant un moyen pour inhiber le fonctionnement électrique du distributeur et un moyen (57) pour provoquer le fonctionnement de ce distributeur par une pression de fluide issue de la source (24).

14. Variateur de vitesse réglable en continu suivant la revendication 13, caractérisé en ce que le variateur (1) peut fonctionner à un de plusieurs régimes et comporte des moyens pour annuler les commandes de sélection de régime et maintenir la transmission dans un régime prédéterminé.

15. Variateur de vitesse réglable en continu suivant la revendication 13 ou 14, caractérisé en ce que le distributeur (23) est actionné par un dispositif à piston et cylindre (59, 60), rappelé élastiquement, qui communique avec la source (24).

16. Variateur de vitesse réglable en continu suivant la revendication 13, 14 ou 15, caractérisé en ce que les moyens d'équilibrage de la réaction de couple comprennent un piston à double face (12) et en ce que les moyens de dépassement délimités connectent un côté de ce piston (13) à la pression de base.

17. Variateur de vitesse réglable en continu suivant l'une des revendications 13 à 16, caractérisé en ce que les moyens de dépassement de limites (59, 60) appliquent au distributeur une force de sollicitation qui varie proportionnellement à la vitesse d'entrée du variateur.

# FIG.1.

## FIG.2.